# EUROPÄISCHE PATENTSCHRIFT

(11) **EP 3 095 061 B1**
(45) Veröffentlichungstag und Bekanntmachung des Hinweises auf die Patenterteilung: **15.07.2020**
(21) Anmeldenummer: 15701131.3
(22) Anmeldetag: 16.01.2015
(51) Int. Cl.: H04L 9/32, G06F 21/32

(54) **VERFAHREN ZUM IDENTIFIZIEREN EINES BENUTZERS UNTER VERWENDUNG EINES KOMMUNIKATIONSGERÄTES**
METHOD FOR IDENTIFYING A USER BY MEANS OF A COMMUNICATION DEVICE
PROCÉDÉ POUR IDENTIFIER UN UTILISATEUR AU MOYEN D'UN APPAREIL DE COMMUNICATION

(30) Priorität: 16.01.2014 DE 102014100463
(43) Veröffentlichungstag der Anmeldung: 23.11.2016
(60) Teilanmeldung: 16193943.4
(73) Patentinhaber: Bundesdruckerei GmbH, 10969 Berlin (DE)
(72) Erfinder: MAGGIONI, Christoph, 10961 Berlin (DE); RACH, Andreas, 10119 Berlin (DE)
(74) Vertreter: Patentship Patentanwaltsgesellschaft mbH
(86) Internationale Anmeldenummer: PCT/EP2015/050745
(87) Internationale Veröffentlichungsnummer: WO 2015/107138

(56) Entgegenhaltungen:
- US-A1- 2012 075 442
- Anonymous: "ID check system for passport check & ID scanners | IDsmart", , 16. November 2012 (2012-11-16), XP055113456, Gefunden im Internet: URL:https://web.archive.org/web/2012111600 1247/http://idscan.co.uk/id-check-idsmart [gefunden am 2014-04-10]
- Moritz Horsch ET AL: "Mobile Authentisierung mit dem neuen Personalausweis (MONA) Mobile authentication using the new German identity card Master-Thesis von", , 31. Juli 2011 (2011-07-31), XP055177866, Gefunden im Internet: URL:https://www.cdc.informatik.tu-darmstad t.de/mona/pubs/201107_MA_Mobile Authentisierung mit dem neuen Personalausweis (MONA).pdf [gefunden am 2015-03-19]
- Anonymous: "Neuer Personalausweis per Handy lesbar", , 26. Februar 2010 (2010-02-26), XP055177902, Gefunden im Internet: URL:http://www.t-online.de/handy/smartphon e/id_21887930/neuer-personalausweis-per-ha ndy-lesbar.html [gefunden am 2015-03-19]
- Cemp: "Reading the US passport with Android - basic access control", , 3 December 2012 (2012-12-03), XP055509959, Retrieved from the Internet: URL:https://web.archive.org/web/2012120306 1722/https://randomoracle.wordpress.com/20 12/08/29/reading-the-us-passport-with-andr oid-basic-access-control/ [retrieved on 2018-09-26]

## Beschreibung

Die vorliegende Erfindung betrifft das Gebiet des Identifizierens eines Benutzers unter Verwendung eines Kommunikationsgerätes.

Die Druckschrift "Anonymous: "ID check system for passport check & ID scanners, ID smart", 16. November 2012, XP055113456" offenbart ein Verfahren zur Überprüfung der Identität eines Benutzers unter Verwendung eines Kommunikationsgerätes.

Die Offenlegungsschrift US2012/075442 A1 offenbart ein Verfahren zum Identifizieren eines Benutzers unter Verwendung eines Kommunikationsgerätes.

Die Druckschrift "Moritz Horsch et al.: "Mobile Authentisierung mit dem neuen Personalausweis (MONA) Mobile authentication using the new German identity card, Master-Thesis von Moritz Horsch", Juli 2011, XP055177866" ist eine Master-Thesis auf dem Gebiet der mobilen Authentisierung mit dem neuen Personalausweis.

Die Druckschrift "Anonymous: "Neuer Personalausweis per Handy lesbar", 26. Ferbruar 2010, XP055177902" beschreibt ein Auslesen von elektronischen Daten aus dem neuen Personalausweis mittels NFC.

Das Identifizieren eines Benutzers durch einen Anbieter von Identifikationsdiensten kann mittels eines Identifikationsdokumentes durchgeführt werden. Hierzu können Personendaten des Benutzers mit Personendaten auf dem Identifikationsdokument durch eine Person, beispielsweise einen Mitarbeiter des Anbieters von Identifikationsdiensten, in einer Filiale des Anbieters von Identifikationsdiensten verglichen werden. Dies wird häufig jedoch als unkomfortabel empfunden, da das Aufsuchen der Filiale des Anbieters von Identifikationsdiensten für den Benutzer einen zeitlichen Mehraufwand darstellen kann. Ferner ist das Vergleichen der Personendaten des Benutzers mit Personendaten auf dem Identifikationsdokument durch eine Person aufwendig und kostenintensiv.

Es ist daher die Aufgabe der vorliegenden Erfindung, ein effizientes, kostengünstiges und automatisiertes Konzept zum Identifizieren eines Benutzers zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch Verwendung eines Kommunikationsgerätes gelöst werden kann, welches ausgebildet ist, zur Identifizierung des Benutzers ein biometrisches Merkmal des Benutzers zu erfassen und an einen elektronischen Identifikationsdienst zu übertragen.

Gemäß einem ersten Aspekt betrifft die Erfindung ein Verfahren zum Identifizieren eines Benutzers unter Verwendung eines Kommunikationsgerätes, wobei dem Benutzer ein Identifikationsdokument zugeordnet ist, mit: Erfassen eines biometrischen Merkmals des Benutzers mittels des Kommunikationsgerätes, um ein erfasstes biometrisches Merkmal zu erhalten; Übertragen des erfassten biometrischen Merkmals an einen elektronischen Identifikationsdienst über ein Kommunikationsnetzwerk durch das Kommunikationsgerät; und Vergleichen des erfassten biometrischen Merkmals mit einem biometrischen Referenzmerkmal durch den elektronischen Identifikationsdienst, um den Benutzer zu identifizieren. Dadurch wird der Vorteil erreicht, dass der Benutzer auf effiziente Weise identifiziert werden kann.

Der Benutzer kann ein Dienstnutzer sein.

Das Kommunikationsgerät kann ein Computer, ein Computerterminal, beispielsweise ein von einem Anbieter von Identifikationsdiensten bereitgestellter Kiosk oder Automat, ein Handgerät, ein Mobiltelefon oder ein Smartphone sein, welches eine Erfassungseinrichtung und eine Kommunikationsschnittstelle umfassen kann.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das biometrische Merkmal des Benutzers kann ein Fingerabdruck des Benutzers, ein Gesichtsbild des Benutzers, ein Irisabbild eines Auges des Benutzers oder ein Stimmmuster des Benutzers sein. Das biometrische Referenzmerkmal kann ein Fingerabdruck, ein Gesichtsbild, ein Irisabbild eines Auges oder ein Stimmmuster sein.

Das Erfassen des biometrischen Merkmals des Benutzers kann durch das Kommunikationsgerät mittels einer Bildkamera, einer Videokamera, eines Fingerabdrucksensors und/oder eines Mikrophons durchgeführt werden.

Das Vergleichen des erfassten biometrischer Merkmals mit dem biometrischen Referenzmerkmal kann mittels eines Mustervergleichs durchgeführt werden. Der Mustervergleich kann ein Vergleich von Bildmerkmalen, beispielsweise Ecken, Kanten, relativen Abständen, Positionen und/oder Lagen, sein. Ferner kann der Mustervergleich ein Vergleich von Stimmmustern sein.

Der Mustervergleich kann ferner manuell durchgeführt werden. Beispielsweise vergleicht hierbei ein Prüfer das erfasste Gesichtsbild des Benutzers mit einem vorgespeicherten Gesichtsbild, um einen Gesichtsbildvergleich durchzuführen. Der Mustervergleich kann durch eine Person in einem Call-Center durchgeführt werden.

Der elektronische Identifikationsdienst kann durch einen Computer oder durch einen Dienstserver bereitgestellt sein, welcher eine Kommunikationsschnittstelle und einen Prozessor umfassen kann. Der elektronische Identifikationsdienst kann als Identanbieter oder Identdienstanbieter für die Identifikation einer Mehrzahl von unterschiedlichen Benutzern vorgesehen sein.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Gemäß einer Ausführungsform ist das erfasste biometrische Merkmal ein Gesichtsbild des Benutzers oder ein Stimmmuster des Benutzers oder ein Fingerabdruck des Benutzers oder ein Irisabbild eines Auges des Benutzers. Dadurch wird der Vorteil erreicht, dass ein effizientes biometrisches Merkmal zum Identifizieren des Benutzers verwendet werden kann.

Gemäß einer Ausführungsform umfasst das Verfahren ferner die Schritte: Empfangen einer Aufforderung zum Übertragen des erfassten biometrischen Merkmals an den elektronischen Identifikationsdienst durch das Kommunikationsgerät; und Übertragen des erfassten biometrischen Merkmals an den elektronischen Identifikationsdienst ansprechend auf den Empfang der Aufforderung durch das Kommunikationsgerät, insbesondere mittels einer Videokonferenzverbindung zwischen dem Kommunikationsgerät und dem elektronischen Identifikationsdienst oder mittels einer Übertragung eines Standbildes. Dadurch wird der Vorteil erreicht, dass eine Durchführung des Verfahrens auf effiziente Weise initiiert werden kann.

Zum Erfassen des biometrischen Merkmals kann ferner eine Videoaufnahme des Benutzers oder eine Bildsequenz mit Aufnahmen des Benutzers erstellt werden, welche an den elektronischen Identifikationsdienst übertragen wird. Der elektronische Identifikationsdienst kann ferner ausgebildet sein, aus der übertragenen Videoaufnahme oder Bildsequenz ein biometrisches Merkmal, beispielsweise ein Gesichtsbild, des Benutzers zu extrahieren und mit einem vorgespeicherten biometrischen Referenzmerkmal zu vergleichen. Hierbei kann die übertragene Videoaufnahme oder Bildsequenz durch den elektronischen Identifikationsdienst zwischengespeichert werden, um bei mehrfacher Ausführung des Verfahrens asynchron eine sequentielle Abarbeitung in einem Stapelverfahren zu ermöglichen.

Der elektronische Identifikationsdienst kann die Aufforderung zum Übertragen des erfassten biometrischen Merkmals an den elektronischen Identifikationsdienst durch das Kommunikationsgerät an das Kommunikationsgerät übertragen. Ferner kann die Aufforderung zum Übertragen des erfassten biometrischen Merkmals an den elektronischen Identifikationsdienst durch das Kommunikationsgerät durch Tätigen einer Eingabe des Benutzers an dem Kommunikationsgerät, beispielsweise einer Identifizierungsanfrage, oder durch eine Anfrage über eine Softwareschnittstelle, sodass ein Dienst bzw. Netzwerkdienst oder eine Applikation bei einem Benutzer bzw. Nutzer die Identifizierungsanfrage bei dem elektronischen Identifikationsdienst, beispielsweise Identifikationsservice, anstoßen kann, gebildet sein.

Die Durchführung des Verfahrens kann durch einen auf einem Prozessor des Kommunikationsgerätes ausgeführten Programmcode, beispielsweise einer Applikation oder App, ansprechend auf Empfang einer Identifizierungsanfrage, beispielsweise von einem elektronischen Netzwerkdienst, initiiert werden, insbesondere mittels einer Software-Schnittstelle initiiert werden.

Die Videokonferenzverbindung kann eine audiovisuelle Kommunikationsverbindung zwischen dem Kommunikationsgerät und dem elektronischen Identifikationsdienst sein. Beispielsweise wird mittels der Videokonferenzverbindung eine Verbindung zwischen dem Benutzer und einem Call-Center aufgebaut, um Personendaten, insbesondere das Gesichtsbild des Benutzers, zu vergleichen. Hierbei können asynchron Video- oder Bilddaten an einen entfernten Dienst oder an ein Call-Center, übertragen werden, wo sie automatisch oder manuell mit Referenzdaten bzw. Referenzmaterial abgeglichen werden.

Gemäß einer Ausführungsform umfasst das Verfahren ferner die Schritte: Auslesen des biometrischen Referenzmerkmals aus einem elektronischen Schaltkreis des Identifikationsdokumentes mittels des Kommunikationsgerätes, um ein ausgelesenes biometrisches Referenzmerkmal zu erhalten; und Übertragen des ausgelesenen biometrischen Referenzmerkmals durch das Kommunikationsgerät über das Kommunikationsnetzwerk an den elektronischen Identifikationsdienst, insbesondere gemeinsam mit dem erfassten biometrischen Merkmal. Dadurch wird der Vorteil erreicht, dass ein biometrisches Referenzmerkmal bereitgestellt werden kann.

Der elektronische Schaltkreis kann ein Chip sein, auf welchem ein biometrisches Referenzmerkmal vorgespeichert sein kann. Das auf dem elektronischen Schaltkreis vorgespeicherte biometrische Referenzmerkmal kann über eine kontaktbehaftete oder eine kontaktlose Schnittstelle, beispielsweise eine Funkschnittstelle, ausgelesen werden.

Das Auslesen des biometrisches Referenzmerkmales kann über eine Kommunikationsschnittstelle des Kommunikationsgerätes durchgeführt werden. Die Kommunikationsschnittstelle kann eine kontaktbehaftete Schnittstelle oder eine kontaktlose Schnittstelle, beispielsweise eine Funkschnittstelle, sein.

Gemäß einer Ausführungsform umfasst das Auslesen des biometrischen Referenzmerkmals aus dem elektronischen Schaltkreis des Identifikationsdokumentes mittels des Kommunikationsgerätes ferner ein Auslesen eines Personendatums, um ein ausgelesenes Personendatum zu erhalten, und wobei das Übertragen des ausgelesenen biometrischen Referenzmerkmals durch das Kommunikationsgerät über das Kommunikationsnetzwerk an den elektronischen Identifikationsdienst ferner ein Übertragen des ausgelesenen Personendatums an den elektronischen Identifikationsdienst umfasst. Dadurch wird der Vorteil erreicht, dass ein Personendatum des Benutzers bereitgestellt werden kann, welches die Identität des Benutzers angeben kann.

Gemäß einer Ausführungsform wird das ausgelesene Personendatum ansprechend auf eine Identifizierung des Benutzers durch den elektronischen Identifikationsdienst über ein Kommunikationsnetzwerk an einen elektronischen Netzwerkdienst übertragen. Dadurch wird der Vorteil erreicht, dass dem elektronischen Netzwerkdienst ein überprüftes Personendatum des Benutzers oder eine Identitätsbestätigung bereitgestellt werden kann.

Ferner kann ein vom elektronischen Netzwerkdienst erfasstes Personendatum bestätigt werden, um die Identität des Benutzers zu bestätigen.

Der elektronische Netzwerkdienst kann ein weiterer Dienst sein, welcher die Identität des Benutzers zum Ausführen einer Anwendung, beispielsweise Electronic Banking, benötigt. Der elektronische Dienst kann durch einen Computer oder einen Dienstserver bereitgestellt sein.

Gemäß einer Ausführungsform wird das Auslesen des biometrischen Referenzmerkmales aus dem elektronischen Schaltkreis des Identifikationsdokumentes unter Verwendung von Nahfeldkommunikation oder von Radiofrequenzidentifikation durchgeführt. Dadurch wird der Vorteil erreicht, dass das biometrische Referenzmerkmal effizient ausgelesen werden kann.

Die Nahfeldkommunikation kann eine Kommunikation mittels Near-Field-Communication (NFC), beispielsweise nach dem Standard ISO/IEC 14443 oder ISO/IEC 18092, sein.

Die Radiofrequenzidentifikation kann eine Kommunikation mittels Radio-Frequency-Identification (RFID), beispielsweise nach dem Standard ISO/IEC 14443 oder ISO/IEC 18000-3, sein.

Gemäß einer Ausführungsform umfasst das Verfahren ferner den Schritt: Authentifizieren des Kommunikationsgerätes gegenüber dem Identifikationsdokument unter Verwendung einer Identifikationskennung des Identifikationsdokumentes, wobei das biometrische Referenzmerkmals aus einem elektronischen Schaltkreis bei Authentifizierung des Kommunikationsgerätes gegenüber dem Identifikationsdokument ausgelesen wird. Dadurch wird der Vorteil erreicht, dass die im elektronischen Schaltkreis des Identifikationsdokumentes gespeicherten biometrischen Referenzmerkmale nur bei autorisiertem Zugriff freigegeben werden.

Gemäß einer Ausführungsform umfasst das Verfahren ferner die Schritte: Erfassen von Daten aus einer maschinenlesbaren Zone des Identifikationsdokumentes mittels einer Bildkamera des Kommunikationsgerätes; und Extrahieren der Identifikationskennung des Identifikationsdokumentes aus den erfassten Daten. Dadurch wird der Vorteil erreicht, dass die Identifikationskennung auf effiziente Weise bereitgestellt werden kann.

Die maschinenlesbare Zone kann ein aufgedruckter Bereich auf dem Identifikationsdokument sein.

Die Daten können in Form einer aufgedruckten Zeichenkette innerhalb einer maschinenlesbaren Zone des Identifikationsdokumentes vorliegen. Zum Erfassen der Daten aus der maschinenlesbaren Zone des Identifikationsdokumentes kann ein Bild der maschinenlesbaren Zone des Identifikationsdokumentes mittels der Bildkamera des Kommunikationsgerätes aufgenommen werden, aus welchem die Daten, beispielsweise mittels einer Zeichenerkennung, extrahiert werden.

Gemäß einer Ausführungsform können Daten aus weiteren bzw. anderen Bereichen des Identifikationsdokumentes mittels der Bildkamera des Kommunikationsgerätes erfasst werden. Hierzu kann mittels der Bildkamera des Kommunikationsgerätes ein Bild des Identifikationsdokumentes aufgenommen werden, aus welchem die Daten, beispielsweise mittels einer Zeichenerkennung, extrahiert werden.

Gemäß einer Ausführungsform wird die Gültigkeit des Identifikationsdokumentes mittels der erfassten Daten überprüft. Dadurch wird der Vorteil erreicht, dass das Identifikationsdokument auf effiziente Weise überprüft werden kann.

Die Gültigkeit des Identifikationsdokumentes kann unter Verwendung von Prüfziffern überprüft werden.

Gemäß einer Ausführungsform kann die Gültigkeit des Identifikationsdokumentes unter Verwendung anderer Daten, beispielsweise Daten aus einer Überprüfung einer dem Identifikationsdokument zugeordneten elektronischen Signatur oder einer Chipsignaturprüfung, bzw. deren Abgleich auf Konsistenz oder Übereinstimmung zueinander überprüft werden.

Gemäß einer Ausführungsform kann zur Überprüfung der Gültigkeit des Identifikationsdokumentes eine Prüfung der Zertifikatskette einer dem Identifikationsdokument zugeordneten elektronischen Signatur, beispielsweise einer Chipsignatur, durchgeführt werden. Hierzu kann ein Referenzzertifikat in einem Speicher des Kommunikationsgerätes vorgespeichert sein.

Gemäß einer Ausführungsform wird das Auslesen des biometrischen Referenzmerkmals aus dem elektronischen Schaltkreis des Identifikationsdokumentes unter Verwendung des Basic Access Control Protokolls durchgeführt. Dadurch wird der Vorteil erreicht, dass ein effizientes Protokoll zum Auslesen des biometrischen Referenzmerkmals aus dem elektronischen Schaltkreis des Identifikationsdokumentes verwendet werden kann.

Gemäß einer Ausführungsform umfasst das Verfahren ferner den Schritt: Auslesen des biometrischen Referenzmerkmals aus einer Datenbank durch den elektronischen Identifikationsdienst, um ein ausgelesenes biometrisches Referenzmerkmal zu erhalten. Dadurch wird der Vorteil erreicht, dass ein biometrisches Referenzmerkmal auf effiziente Weise bereitgestellt werden kann.

Die Datenbank kann in einem Speicher des elektronischen Identifikationsdienstes gespeichert sein.

Gemäß einer Ausführungsform wird das Übertragen des erfassten biometrischen Merkmals an den elektronischen Identifikationsdienst über ein Kommunikationsnetzwerk durch das Kommunikationsgerät unter Verwendung eines Transportschichtsicherheitsprotokolls oder verschlüsselt durchgeführt.

Das Transportschichtsicherheitsprotokoll kann ein Transport Layer Security (TLS) Protokoll sein.

Gemäß einer Ausführungsform überträgt der elektronische Identifikationsdienst ferner ansprechend auf eine Identifizierung des Benutzers über ein Kommunikationsnetzwerk eine Bestätigung der Identifizierung an das Kommunikationsgerät oder an den elektronischen Netzwerkdienst. Dadurch wird der Vorteil erreicht, dass eine Identifizierung des Benutzers auf effiziente Weise bestätigt werden kann.

Gemäß einer Ausführungsform wird die Bestätigung auf einer Anzeigeeinrichtung des Kommunikationsgerätes angezeigt. Dadurch wird der Vorteil erreicht, dass dem Benutzer eine Identifizierung durch den elektronischen Identifikationsdienst auf effiziente Weise angezeigt werden kann.

Gemäß einem zweiten Aspekt betrifft die Erfindung ein Kommunikationsgerät zum Identifizieren eines Benutzers, wobei dem Benutzer ein Identifikationsdokument zugeordnet ist, mit: einer Kommunikationsschnittstelle zum Empfangen einer Aufforderung zur Übersendung eines biometrischen Merkmals des Benutzers an einen elektronischen Identifikationsdienst; und einer Erfassungseinrichtung zum Erfassen eines biometrischen Merkmals des Benutzers ansprechend auf den Empfang der Aufforderung, um ein erfasstes biometrisches Merkmal zu erhalten; und wobei die Kommunikationsschnittstelle ferner ausgebildet ist, das erfasste biometrische Merkmal an den elektronischen Identifikationsdienst über ein Kommunikationsnetzwerk zu übertragen. Dadurch wird der Vorteil erreicht, dass ein Kommunikationsgerät zum Identifizieren eines Benutzers bereitgestellt werden kann.

Gemäß einer Ausführungsform weist die Erfassungseinrichtung eine digitale Bildkamera zur Erfassung eines Gesichtsbildes oder von Gesichtsbildern des Benutzers, wobei das Gesichtsbild des Benutzers das erfasste biometrische Merkmal ist, oder eine digitale Videokamera zur Erfassung eines Gesichtsvideos des Benutzers, wobei das Gesichtsbild des Benutzers das erfasste biometrische Merkmal ist, oder eine digitale Bildkamera zur Erfassung eines Irisabbildes eines Auges des Benutzers, wobei das Irisabbild des Auges des Benutzers das erfasste biometrische Merkmal ist, oder einen Fingerabdrucksensor zum Erfassen eines Fingerabdruckes des Benutzers, wobei der Fingerabdruck des Benutzers das erfasste biometrische Merkmal ist, oder ein Mikrophon zur Erfassung eines Stimmmusters des Benutzers, wobei das Stimmmuster des Benutzers das biometrische Merkmal ist, auf. Dadurch wird der Vorteil erreicht, dass ein biometrisches Merkmal des Benutzers effizient erfasst werden kann.

Gemäß einer Ausführungsform umfasst das Kommunikationsgerät eine weitere Kommunikationsschnittstelle, insbesondere eine Nahfeldschnittstelle, wobei die weitere Kommunikationsschnittstelle ausgebildet ist, das biometrische Referenzmerkmal aus einem elektronischen Schaltkreis des Identifikationsdokumentes auszulesen, und wobei die Kommunikationsschnittstelle ferner ausgebildet ist, das biometrische Referenzmerkmal an den elektronischen Identifikationsdienst über ein Kommunikationsnetzwerk zu übertragen. Dadurch wird der Vorteil erreicht, dass ein biometrisches Referenzmerkmal auf effiziente Weise bereitgestellt werden kann.

Die Nahfeldschnittstelle kann eine Kommunikationsschnittstelle zur Kommunikation mittels Near-Field-Communication (NFC), beispielsweise nach dem Standard ISO/IEC 14443 oder ISO/IEC 18092, sein. Die Nahfeldschnittstelle kann beispielsweise eine Induktivität als Nahfeldantenne umfassen.

Gemäß einem dritten Aspekt betrifft die Erfindung einen elektronischen Identifikationsdienst zum Identifizieren eines Benutzers, wobei dem Benutzer ein Identifikationsdokument zugeordnet ist, mit: einer Kommunikationsschnittstelle zum Aussenden einer Aufforderung zur Übertragung eines biometrischen Merkmals des Benutzers an den elektronischen Identifikationsdienst; und einem Prozessor, welcher ausgebildet ist, das empfangene biometrische Merkmal mit einem biometrischen Referenzmerkmal zu vergleichen, um den Benutzer zu identifizieren. Dadurch wird der Vorteil erreicht, dass ein elektronischer Identifikationsdienst zum Identifizieren eines Benutzers bereitgestellt werden kann.

Gemäß einer Ausführungsform umfasst der elektronische Identifikationsdienst ferner: einen Speicher, in welchem das biometrische Referenzmerkmal in einer Datenbank vorgespeichert und aus der Datenbank auslesbar ist, um ein ausgelesenes biometrisches Referenzmerkmal zu erhalten. Dadurch wird der Vorteil erreicht, dass das biometrische Referenzmerkmal auf effiziente Weise bereitgestellt werden kann.

Gemäß einer Ausführungsform ist die Kommunikationsschnittstelle ferner ausgebildet, ansprechend auf eine Identifizierung des Benutzers über ein Kommunikationsnetzwerk eine Bestätigung der Identifizierung an ein Kommunikationsgerät oder einen elektronischen Netzwerkdienst zu übertragen. Dadurch wird der Vorteil erreicht, dass eine Bestätigung der Identifizierung bereitgestellt werden kann. Darüber hinaus wird so erreicht, dass für einen Vorgang zwischen einem Benutzer und einem Dienst eine Identitätsbestätigung erfolgt.

Gemäß einem vierten Aspekt betrifft die Erfindung ein Computerprogramm mit einem Programmcode zur Ausführung des Verfahrens zum Identifizieren eines Benutzers, wenn der Programmcode auf einem Computer ausgeführt wird. Dadurch wird der Vorteil erreicht, dass das Verfahren automatisiert und wiederholbar ausgeführt werden kann.

Das Computerprogramm kann eine Folge von Befehlen für einen Prozessor eines Computers umfassen. Das Computerprogramm kann in Form eines maschinenlesbaren Programmcodes vorliegen.

Der Computer kann einen Prozessor, einen Speicher, eine Eingabeschnittstelle und/oder eine Ausgabeschnittstelle umfassen. Der Prozessor des Computers kann ausgebildet sein, das Computerprogramm auszuführen.

Das Computerprogramm kann auf dem Prozessor des Kommunikationsgerätes ausgeführt werden.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Diagramm eines Verfahrens zum Identifizieren eines Benutzers unter Verwendung eines Kommunikationsgerätes gemäß einer Ausführungsform;
- Fig. 2: ein schematisches Diagramm eines Kommunikationsgerätes zum Identifizieren eines Benutzers gemäß einer Ausführungsform; und
- Fig. 3: ein schematisches Diagramm eines elektronischen Identifikationsdienstes zum Identifizieren eines Benutzers gemäß einer Ausführungsform.

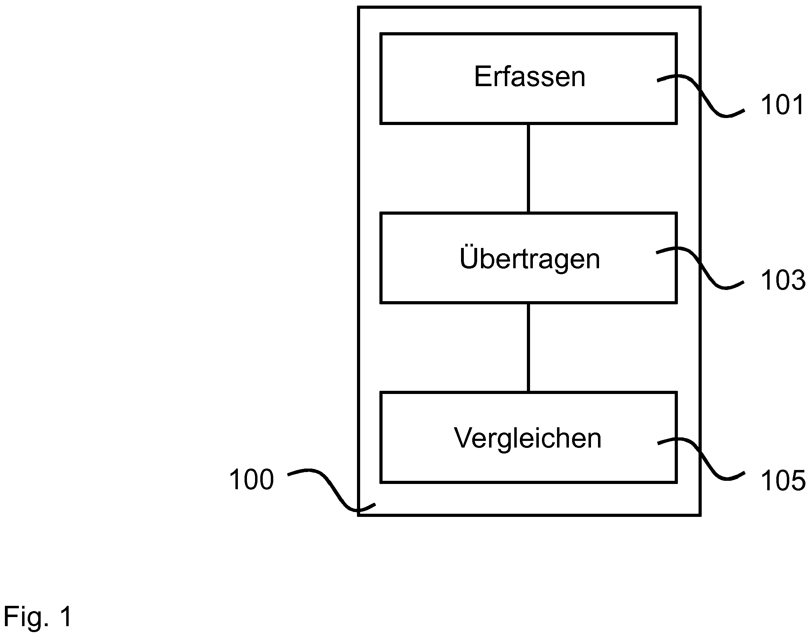

Fig. 1 zeigt ein schematisches Diagramm eines Verfahrens 100 zum Identifizieren eines Benutzers unter Verwendung eines Kommunikationsgerätes gemäß einer Ausführungsform.

Das Verfahren 100 umfasst ein Erfassen 101 eines biometrischen Merkmals des Benutzers mittels des Kommunikationsgerätes, um ein erfasstes biometrisches Merkmal zu erhalten, ein Übertragen 103 des erfassten biometrischen Merkmals an einen elektronischen Identifikationsdienst über ein Kommunikationsnetzwerk durch das Kommunikationsgerät, und ein Vergleichen 105 des erfassten biometrischen Merkmals mit einem biometrischen Referenzmerkmal durch den elektronischen Identifikationsdienst, um den Benutzer zu identifizieren.

Das Kommunikationsgerät kann ein Computer, ein Computerterminal, ein Handgerät, ein Mobiltelefon oder ein Smartphone sein, welches eine Erfassungseinrichtung und eine Kommunikationsschnittstelle umfassen kann.

Der Benutzer kann ein Dienstnutzer sein. Ferner kann dem Benutzer ein Identifikationsdokument zugeordnet sein.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das biometrische Merkmal des Benutzers kann ein Fingerabdruck des Benutzers, ein Gesichtsbild des Benutzers, ein Irisabbild eines Auges des Benutzers oder ein Stimmmuster des Benutzers sein. Das biometrische Referenzmerkmal kann ein Fingerabdruck, ein Gesichtsbild, ein Irisabbild eines Auges oder ein Stimmmuster sein.

Das Erfassen 101 des biometrischen Merkmals des Benutzers kann durch das Kommunikationsgerät mittels einer Bildkamera, einer Videokamera, eines Fingerabdrucksensors und/oder eines Mikrophons durchgeführt werden.

Das Vergleichen 105 des erfassten biometrischen Merkmals mit dem biometrischen Referenzmerkmal kann mittels eines Mustervergleichs durchgeführt werden. Der Mustervergleich kann ein Vergleich von Bildmerkmalen, beispielsweise Ecken, Kanten, relativen Abständen, Positionen und/oder Lagen, sein. Ferner kann der Mustervergleich ein Vergleich von Stimmmustern sein.

Gemäß einer Ausführungsform kann das Vergleichen 105 des erfassten biometrischen Merkmals mit dem biometrischen Referenzmerkmal manuell durchgeführt werden. Beispielsweise vergleicht hierbei ein Prüfer das erfasste Gesichtsbild des Benutzers mit einem vorgespeicherten Gesichtsbild, um einen manuellen Abgleich eines Gesichtsmerkmals durchzuführen. Der Mustervergleich kann durch eine Person in einem Call-Center durchgeführt werden.

Der elektronische Identifikationsdienst kann durch einen Computer oder durch einen Dienstserver bereitgestellt sein, welcher eine Kommunikationsschnittstelle und einen Prozessor umfassen kann. Der elektronische Identifikationsdienst kann als Identanbieter oder Identdienstanbieter für die Identifikation einer Mehrzahl von unterschiedlichen Benutzern vorgesehen sein.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

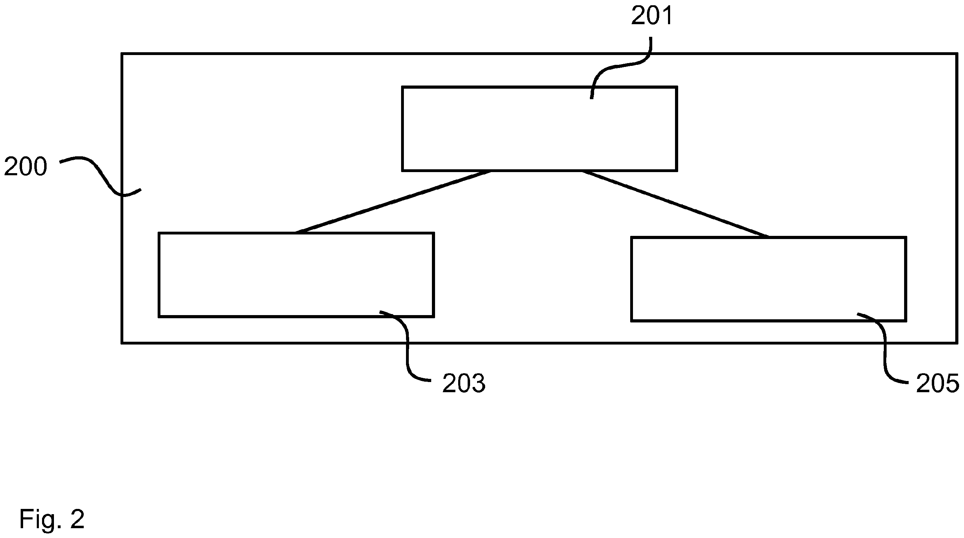

Fig. 2 zeigt ein schematisches Diagramm eines Kommunikationsgerätes 200 zum Identifizieren eines Benutzers gemäß einer Ausführungsform. Das Kommunikationsgerät 200 umfasst eine Kommunikationsschnittstelle 201, eine Erfassungseinrichtung 203 und eine weitere Kommunikationsschnittstelle 205. Hierbei ist die Kommunikationsschnittstelle 201 mit der Erfassungseinrichtung 203 und der weiteren Kommunikationsschnittstelle 205 verbunden.

Das Kommunikationsgerät 200 kann ein Computer, ein Computerterminal, ein Handgerät, ein Mobiltelefon oder ein Smartphone sein.

Die Kommunikationsschnittstelle 201 kann ausgebildet sein, eine Aufforderung zur Übersendung eines biometrischen Merkmals des Benutzers an einen elektronischen Identifikationsdienst zu empfangen.

Die Erfassungseinrichtung 203 kann ausgebildet sein, ein biometrisches Merkmal des Benutzers ansprechend auf den Empfang der Aufforderung zu erfassen, um ein erfasstes biometrisches Merkmal zu erhalten. Ferner kann die Erfassungseinrichtung 203 eine digitale Bildkamera zur Erfassung eines Gesichtsbildes des Benutzers, wobei das Gesichtsbild des Benutzers das erfasste biometrische Merkmal ist, oder eine digitale Bildkamera zur Erfassung eines Irisabbildes eines Auges des Benutzers, wobei das Irisabbild des Auges des Benutzers das erfasste biometrische Merkmal ist, oder einen Fingerabdrucksensor zum Erfassen eines Fingerabdruckes des Benutzers, wobei der Fingerabdruck des Benutzers das erfasste biometrische Merkmal ist, oder ein Mikrophon zur Erfassung eines Stimmmusters des Benutzers, wobei das Stimmmuster des Benutzers das biometrische Merkmal ist, aufweisen.

Die Kommunikationsschnittstelle 201 kann ferner ausgebildet sein, das erfasste biometrische Merkmal an den elektronischen Identifikationsdienst über ein Kommunikationsnetzwerk zu übertragen.

Die weitere Kommunikationsschnittstelle 205 kann ausgebildet sein, ein biometrische Referenzmerkmal aus einem elektronischen Schaltkreis des Identifikationsdokumentes auszulesen. Ferner kann die weitere Kommunikationsschnittstelle 205 eine Nahfeldschnittstelle umfassen. Die Nahfeldschnittstelle kann eine Kommunikationsschnittstelle zur Kommunikation mittels Near-Field-Communication (NFC), beispielsweise nach dem Standard ISO/IEC 14443 oder ISO/IEC 18092, sein. Die Nahfeldschnittstelle kann beispielsweise eine Induktivität als Nahfeldantenne umfassen.

Ferner kann die Kommunikationsschnittstelle 201 ausgebildet sein, das biometrische Referenzmerkmal an den elektronischen Identifikationsdienst über ein Kommunikationsnetzwerk zu übertragen.

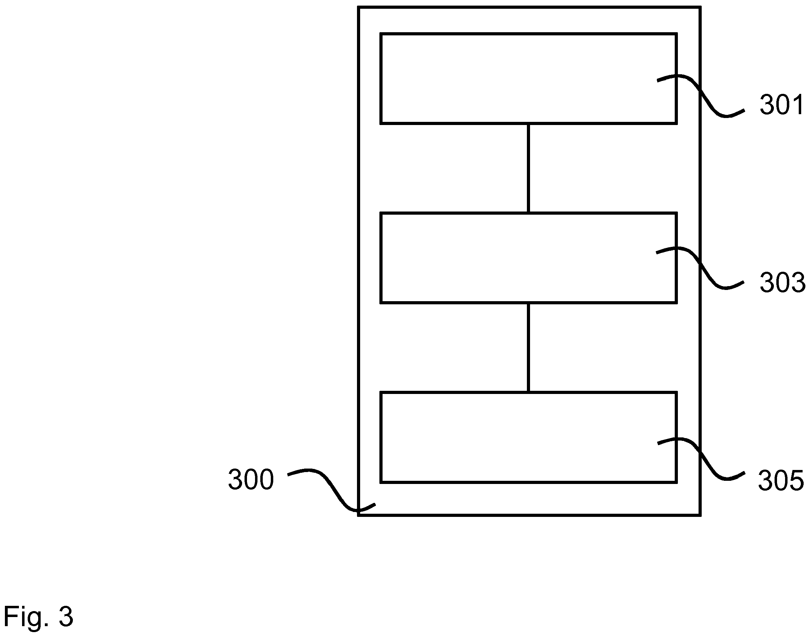

Fig. 3 zeigt ein schematisches Diagramm eines elektronischen Identifikationsdienstes 300 zum Identifizieren eines Benutzers gemäß einer Ausführungsform. Der elektronische Identifikationsdienst 300 umfasst eine Kommunikationsschnittstelle 301, einen Prozessor 303 und einen Speicher 305. Der Prozessor 303 ist mit der Kommunikationsschnittstelle 301 und dem Speicher 305 verbunden.

Die Kommunikationsschnittstelle 301 kann ausgebildet sein, eine Aufforderung zur Übertragung eines biometrischen Merkmals des Benutzers an den elektronischen Identifikationsdienst 300 auszusenden. Ferner kann die Kommunikationsschnittstelle 301 ausgebildet sein, ansprechend auf eine Identifizierung des Benutzers über ein Kommunikationsnetzwerk eine Bestätigung der Identifizierung an ein Kommunikationsgerät oder einen elektronischen Netzwerkdienst zu übertragen.

Der Prozessor 303 kann ausgebildet sein, ein empfangenes biometrisches Merkmal mit einem biometrischen Referenzmerkmal zu vergleichen, um den Benutzer zu identifizieren.

Gemäß einer Ausführungsform können auch andere Daten abgeglichen werden, beispielsweise optisch erfasste Personendaten mit denen im Chip und die Echtheitsprüfung der Chipdaten mittels deren Chipsignatur und öffentlich verfügbaren Zertifikaten, wie eine Chipauthentifizierung nach dem öffentlichen Verfahren Passive Authentication. Dies kann sowohl von dem elektronischen Identifikationsdienst 300 als auch von dem Kommunikationsgerät durchgeführt werden.

In dem Speicher 305 kann das biometrische Referenzmerkmal in einer Datenbank vorgespeichert und aus der Datenbank auslesbar sein, um ein ausgelesenes biometrisches Referenzmerkmal zu erhalten.

Gemäß einer Ausführungsform kann die Identität eines Benutzers auf Vertrauensbasis bzw. schwach abgesichert geprüft und bestimmt werden, wobei Identifikationsdokumente oder ID-Dokumente schwach, d.h. anhand eine Untermenge von Sicherheitsmerkmalen, geprüft werden.

Gemäß einer Ausführungsform kann die Identität eines Benutzer oder einer Person mittels eines Identifikationsdokumentes oder ID-Dokument und einem Kommunikationsgerät 200 oder Smartphone mobil gegenüber einem elektronischen Netzwerkdienst oder Diensteanbieter nachgewiesen werden, ohne eine Filiale eines Anbieters von Identifikationsdiensten oder Identanbieters aufzusuchen.

Gemäß einer Ausführungsform kann ein Benutzer oder Dienstnutzer zur Identifizierung eine Filiale eines Anbieters von Identifikationsdiensten oder des Identdienstanbieters aufsuchen. Zur Identifizierung des Benutzers können die Personendaten von einem Identifikationsdokument oder vom ID-Dokument durch eine Person, beispielsweise einen Mitarbeiter des Anbieters von Identifikationsdiensten, aufgenommen bzw. abgeglichen werden. Hierbei kann eine schwache Prüfung des Identifikationsdokumentes oder ID-Dokumentes durchgeführt werden, beispielsweise kann eine Untermenge von Sicherheitsmerkmalen des Identifikationsdokumentes überprüft werden.

Gemäß einer Ausführungsform können bei elektronischen Identifikationsdiensten 300 oder mobilen Lösungen die Personendaten des Benutzers und/oder weitere Daten erfasst werden. Ferner können rückversichernde Nachfragen ausgetauscht werden.

Gemäß einer Ausführungsform können Geschäftsprozesse an bereits bestätigte Identitäten geknüpft werden, beispielsweise an ein Bankkonto und/oder Mobiltelefonvertragsdaten.

Gemäß einer Ausführungsform kann der Benutzer oder der Dienstnutzer ein Identifikationsdokument oder ID-Dokument und ein Kommunikationsgerät 200 oder Smartphone mit einer Erfassungseinrichtung 203 oder einer App oder Anwendung zur Durchführung des Verfahrens 100 zur Identifizierung des Benutzers verwenden.

Gemäß einer Ausführungsform kann der Benutzer seine Identität gegenüber einem elektronischen Netzwerkdienst oder Dienstanbieter nachweisen, indem die Erfassungseinrichtung 203 oder die App das Identifikationsdokument oder ID-Dokument ausliest und einzelne Sicherheitsmerkmale, beispielsweise Prüfziffern, Signatur des elektronischen Schaltkreises des Identifikationsdokumentes oder des integrierten Chips überprüft. Ferner kann der elektronische Netzwerkdienst oder Dienstanbieter diesen Schritt anstoßen.

Gemäß einer Ausführungsform kann das biometrische Merkmal oder können die Daten an einen elektronischen Identifikationsdienst 300 oder Identservice übertragen werden.

Gemäß einer Ausführungsform kann sich ein Call-Center des Anbieters des elektronischen Identifikationsdienstes direkt mit dem Benutzer des Kommunikationsgerätes 200 oder der Person auf dem Smartphone verbinden, um die Personendaten, insbesondere das Gesichtsbild, abzugleichen, vorzugsweise mittels einer Videokonferenzverbindung oder Videoverbindung.

Gemäß einer Ausführungsform kann sich das Call-Center des Anbieters des elektronischen Identifikationsdienstes asynchron mit dem Benutzer des Kommunikationsgerätes 200 verbinden, um eine Videoaufnahme des Gesichts des Benutzers, beispielsweise ein Gesichtsvideo, oder eine aufgenommene Gesichtsbildsequenz an den elektronischen Identifikationsdienst 300 zu übertragen und dort in einem Stapelverarbeitungsverfahren effizient abzuarbeiten. Dadurch kann der elektronische Identifikationsdienst 300 kostengünstig bereitgestellt werden.

Gemäß einer Ausführungsform kann der elektronische Identifikationsdienst 300 oder der Identservice die Identität innerhalb kurzer Zeit dem elektronischen Netzwerkdienst oder Dienstanbieter bestätigen und eine Rückmeldung an den Benutzer übertragen oder an die Person geben.

Gemäß einer Ausführungsform kann dem elektronischen Netzwerkdienst oder Dienstanbieter ein Sicherheitslevel, beispielsweise ein Wahrscheinlichkeitsmaß für die Identifizierung des Benutzers, übermittelt werden. Der Sicherheitslevel kann abhängig vom erfassten biometrischen Merkmal, vom geprüften Sicherheitsmerkmal des Identifikationsdokumentes oder ID-Dokumentes, und/oder vom Kommunikationsgerät 200 des Benutzers oder Smartphone der Person bestimmt werden.

Gemäß einer Ausführungsform können zu Bestimmung des Sicherheitslevels weitere Abgleiche, beispielsweise mit verfügbaren Sanktionslisten, beim elektronischen Identifikationsdienst 300 oder Identservice vorgenommen werden.

Gemäß einer Ausführungsform kann der Vorteil erreicht werden, dass eine Identitätsbestätigung mit hoher Güte im privatwirtschaftlichen Umfeld bereitgestellt werden kann. Die Identitätsbestätigung kann alternativ zu einer manuellen Prüfung eines Identifikationsdokumentes oder ID-Dokumentes in einer Filiale eines Anbieters von Identifikationsdiensten oder Identfiliale durch eine Person oder einen Mitarbeiter bereitgestellt werden.

Gemäß einer Ausführungsform kann der Vorteil erreicht werden, dass ein Identitätsnachweis mobil durchgeführt werden kann.

Gemäß einer Ausführungsform kann der Vorteil erreicht werden, dass Geschäftsprozesse verbessert werden können.

Gemäß einer Ausführungsform kann der Vorteil erreicht werden, dass das Verfahren 100 zum Identifizieren eines Benutzers einfach realisiert werden kann.

Gemäß einer Ausführungsform kann bei dem Verfahren 100 zum Identifizieren des Benutzers unter Verwendung des Kommunikationsgerätes 200, beispielsweise eines Smartphones, ein Prozessschritt Personenidentifikation durchgeführt werden, bei dem überprüft wird, ob der Benutzer zu dem Identifikationsdokument passt oder dem Identifikationsdokument zugeordnet werden kann. Hierbei kann ein Fingerabdruckvergleich zwischen einem in dem elektronischen Schaltkreis des Identifikationsdokuments gespeicherten Referenzfingerabdruck und einem erfassten Fingerabdruck des Benutzers oder einem erfassten Fingerabdruck einer weiteren Person durchgeführt werden. Beispielsweise ist der elektronische Schaltkreis des Identifikationsdokuments ein Chip eines elektronischen Identifikationsdokuments, wie eines ePass-Dokuments, eines eID-Dokuments, eines eVisa-Dokuments oder eines eTitel-Dokuments, und wird der Fingerabdruck mittels eines Fingerabdrucksensors oder eines Fingerabdrucklesers erfasst oder live aufgenommen, welcher vorzugsweise in dem Kommunikationsgerät 200 integriert ist. Ferner kann das Identifikationsdokument ein Identitätsdokument sein.

### BEZUGSZEICHENLISTE

- 100: Verfahren zum Identifizieren eines Benutzers
- 101: Erfassen eines biometrischen Merkmals des Benutzers
- 103: Übertragen des erfassten biometrischen Merkmals
- 105: Vergleichen des erfassten biometrischen Merkmals mit einem biometrischen Referenzmerkmal

- 200: Kommunikationsgerät
- 201: Kommunikationsschnittstelle
- 203: Erfassungseinrichtung
- 205: Weitere Kommunikationsschnittstelle

- 300: Elektronischer Identifikationsdienst
- 301: Kommunikationsschnittstelle
- 303: Prozessor
- 305: Speicher

## Patentansprüche

1. Verfahren (100) zum Identifizieren eines Benutzers unter Verwendung eines Kommunikationsgerätes (200), wobei dem Benutzer ein Identifikationsdokument zugeordnet ist, mit:
Erfassen (101) eines biometrischen Merkmals des Benutzers mittels des Kommunikationsgerätes (200), um ein erfasstes biometrisches Merkmal zu erhalten;
Übertragen (103) des erfassten biometrischen Merkmals an einen elektronischen Identifikationsdienst über ein Kommunikationsnetzwerk durch das Kommunikationsgerät (200); und
Vergleichen (105) des erfassten biometrischen Merkmals mit einem biometrischen Referenzmerkmal durch den elektronischen Identifikationsdienst (300), um den Benutzer zu identifizieren; und
Auslesen des biometrischen Referenzmerkmals aus einem elektronischen Schaltkreis des Identifikationsdokumentes mittels des Kommunikationsgerätes (200), um ein ausgelesenes biometrisches Referenzmerkmal zu erhalten; und Übertragen des ausgelesenen biometrischen Referenzmerkmals durch das Kommunikationsgerät (200) über das Kommunikationsnetzwerk an den elektronischen Identifikationsdienst (300),
wobei das Auslesen des biometrischen Referenzmerkmals aus dem elektronischen Schaltkreis des Identifikationsdokumentes mittels des Kommunikationsgerätes (200) ferner ein Auslesen eines Personendatums umfasst, um ein ausgelesenes Personendatum zu erhalten, und wobei das Übertragen des ausgelesenen biometrischen Referenzmerkmals durch das Kommunikationsgerät (200) über das Kommunikationsnetzwerk an den elektronischen Identifikationsdienst (300) ferner ein Übertragen des ausgelesenen Personendatums an den elektronischen Identifikationsdienst (300) umfasst, wobei das Personendatum die Identität des Benutzers angibt,
wobei das Verfahren ferner die Schritte umfasst: Erfassen von Daten aus einer maschinenlesbaren Zone des Identifikationsdokumentes mittels einer Bildkamera des Kommunikationsgerätes; und Extrahieren einer Identifikationskennung des Identifikationsdokumentes aus den erfassten Daten, wobei die Gültigkeit des Identifikationsdokumentes mittels der erfassten Daten überprüft wird, wobei zur Überprüfung der Gültigkeit des Identifikationsdokumentes eine Prüfung der Zertifikatskette einer dem Identifikationsdokument zugeordneten elektronischen Signatur durchgeführt wird, wobei hierzu ein Referenzzertifikat in einem Speicher des Kommunikationsgerätes vorgespeichert ist.

2. Verfahren (100) nach Anspruch 1, wobei das erfasste biometrische Merkmal ein Gesichtsbild des Benutzers oder ein Stimmmuster des Benutzers oder ein Fingerabdruck des Benutzers oder ein Irisabbild eines Auges des Benutzers ist.

3. Verfahren (100) nach einem der vorstehenden Ansprüche, mit:
Empfangen einer Aufforderung zum Übertragen des erfassten biometrischen Merkmals an den elektronischen Identifikationsdienst (300) durch das Kommunikationsgerät (200); und
Übertragen des erfassten biometrischen Merkmals an den elektronischen Identifikationsdienst (300) ansprechend auf den Empfang der Aufforderung durch das Kommunikationsgerät (200), insbesondere mittels einer Videokonferenzverbindung zwischen dem Kommunikationsgerät (200) und dem elektronischen Identifikationsdienst (300) oder mittels einer Übertragung eines Standbildes.

4. Verfahren (100) nach einem der vorstehenden Ansprüche, wobei das ausgelesene Personendatum ansprechend auf eine Identifizierung des Benutzers durch den elektronischen Identifikationsdienst (300) über ein Kommunikationsnetzwerk an einen elektronischen Netzwerkdienst übertragen wird.

5. Verfahren (100) nach einem der vorstehenden Ansprüche, wobei das Auslesen des biometrischen Referenzmerkmales aus dem elektronischen Schaltkreis des Identifikationsdokumentes unter Verwendung von Nahfeldkommunikation oder von Radiofrequenzidentifikation durchgeführt wird.

6. Verfahren (100) nach einem der vorstehenden Ansprüche, mit:
Auslesen des biometrischen Referenzmerkmals aus einer Datenbank durch den elektronischen Identifikationsdienst (300), um ein ausgelesenes biometrisches Referenzmerkmal zu erhalten.

7. Verfahren (100) nach einem der vorstehenden Ansprüche soweit rückbezogen auf Anspruch 4, wobei der elektronische Identifikationsdienst (300) ferner ansprechend auf eine Identifizierung des Benutzers über ein Kommunikationsnetzwerk eine Bestätigung der Identifizierung an das Kommunikationsgerät (200) oder an den elektronischen Netzwerkdienst überträgt, oder wobei die Bestätigung auf einer Anzeigeeinrichtung des Kommunikationsgerätes (200) angezeigt wird.

8. Kommunikationsgerät (200) zum Identifizieren eines Benutzers, wobei dem Benutzer ein Identifikationsdokument zugeordnet ist, mit:
einer Kommunikationsschnittstelle (201) zum Empfangen einer Aufforderung zur Übersendung eines biometrischen Merkmals des Benutzers an einen elektronischen Identifikationsdienst (300); und
einer Erfassungseinrichtung (203) zum Erfassen eines biometrischen Merkmals des Benutzers ansprechend auf den Empfang der Aufforderung, um ein erfasstes biometrisches Merkmal zu erhalten; und
wobei die Kommunikationsschnittstelle (201) ferner ausgebildet ist, das erfasste biometrische Merkmal an den elektronischen Identifikationsdienst (300) über ein Kommunikationsnetzwerk zu übertragen, wobei
das Kommunikationsgerät eine weitere Kommunikationsschnittstelle (205) umfasst, wobei die weitere Kommunikationsschnittstelle (205) ausgebildet ist, das biometrische Referenzmerkmal aus einem elektronischen Schaltkreis des Identifikationsdokumentes auszulesen, und wobei die Kommunikationsschnittstelle (201) ferner ausgebildet ist, das biometrische Referenzmerkmal an den elektronischen Identifikationsdienst (300) über ein Kommunikationsnetzwerk zu übertragen,
wobei das Auslesen des biometrischen Referenzmerkmals aus dem elektronischen Schaltkreis des Identifikationsdokumentes ferner ein Auslesen eines Personendatums umfasst, um ein ausgelesenes Personendatum zu erhalten, und wobei das Übertragen des ausgelesenen biometrischen Referenzmerkmals über das Kommunikationsnetzwerk an den elektronischen Identifikationsdienst (300) ferner ein Übertragen des ausgelesenen Personendatums an den elektronischen Identifikationsdienst (300) umfasst, wobei das Personendatum die Identität des Benutzers angibt,
wobei das Kommunikationsgerät (200) eine Bildkamera zum Erfassen von Daten aus einer maschinenlesbaren Zone des Identifikationsdokumentes umfasst, wobei das Kommunikationsgerät (200) ausgebildet ist, eine Identifikationskennung des Identifikationsdokumentes aus den erfassten Daten zu extrahieren, wobei das Kommunikationsgerät (200) ausgebildet ist, die Gültigkeit des Identifikationsdokumentes mittels der erfassten Daten zu überprüfen, wobei zur Überprüfung der Gültigkeit des Identifikationsdokumentes eine Prüfung der Zertifikatskette einer dem Identifikationsdokument zugeordneten elektronischen Signatur durchgeführt wird, wobei hierzu ein Referenzzertifikat in einem Speicher des Kommunikationsgerätes (200) vorgespeichert ist.

9. Kommunikationsgerät (200) nach Anspruch 8, wobei die Erfassungseinrichtung (203) eine digitale Bildkamera zur Erfassung eines Gesichtsbildes oder von Gesichtsbildern des Benutzers, wobei das Gesichtsbild des Benutzers das erfasste biometrische Merkmal ist, oder eine digitale Videokamera zur Erfassung eines Gesichtsvideos des Benutzers, wobei das Gesichtsbild des Benutzers das erfasste biometrische Merkmal ist, oder eine digitale Bildkamera zur Erfassung eines Irisabbildes eines Auges des Benutzers, wobei das Irisabbild des Auges des Benutzers das erfasste biometrische Merkmal ist, oder einen Fingerabdrucksensor zum Erfassen eines Fingerabdruckes des Benutzers, wobei der Fingerabdruck des Benutzers das erfasste biometrische Merkmal ist, oder ein Mikrophon zur Erfassung eines Stimmmusters des Benutzers, wobei das Stimmmuster des Benutzers das biometrische Merkmal ist, aufweist.

10. Computerprogramm mit einem Programmcode zur Ausführung der Verfahrensschritte des Kommunikationsgeräts (200) des Verfahrens (100) zum Identifizieren eines Benutzers nach einem der Ansprüche 1 bis 7, wenn der Programmcode auf dem Kommunikationsgerät (200) nach Anspruch 8 ausgeführt wird.

## Claims

1. A method (100) for identifying a user by means of a communication device (200), wherein an identification document is assigned to the user, the method comprising:
detecting (101) a biometric feature of the user by means of the communication device (200) in order to obtain a detected biometric feature;
transmitting (103) the detected biometric feature to an electronic identification service via a communication network by the communication device (200); and
comparing (105) the detected biometric feature with a biometric reference feature by the electronic identification service (300) to identify the user; and
reading out the biometric reference feature from an electronic circuit of the identification document by means of the communication device (200) in order to obtain a read out biometric reference feature; and
transmitting the read biometric reference feature by the communication device (200) via the communication network to the electronic identification service (300),
wherein reading out the biometric reference feature from the electronic circuit of the identification document by means of the communication device (200) further comprises reading out personal data in order to obtain read out personal data, and wherein the transmission of the read out biometric reference feature by the communication device (200) via the communication network to the electronic identification service (300) further comprises transmitting the read out personal data to the electronic identification service (300), wherein the personal data indicates the identity of the user,
wherein the method further comprises the following steps: capturing data from a machine-readable zone of the identification document by means of an image camera of the communication device; and extracting an identification identifier of the identification document from the captured data, wherein the validity of the identification document is checked by means of the captured data, wherein a check of the certificate chain of an electronic signature associated with the identification document is carried out to check the validity of the identification document, wherein a reference certificate is pre-stored in a memory of the communication device for this purpose.

2. The method (100) of claim 1, wherein the detected biometric feature is a facial image of the user or a voice pattern of the user or a fingerprint of the user or an iris image of an eye of the user.

3. The method (100) according to one of the preceding claims, comprising:
receiving, by the communication device (200), a request to transmit the detected biometric feature to the electronic identification service (300); and
transmitting the detected biometric feature to the electronic identification service (300) in response to the receipt of the request by the communication device (200), in particular by means of a video conference connection between the communication device (200) and the electronic identification service (300) or by means of a transmission of a still picture.

4. The method (100) according to one of the preceding claims, wherein the read out personal data is transmitted in response to an identification of the user by the electronic identification service (300) via a communication network to an electronic network service.

5. The method (100) according to one of the preceding claims, wherein the reading out of the biometric reference feature from the electronic circuit of the identification document is carried out by using near field communication or radio frequency identification.

6. The method (100) according to one of the preceding claims, comprising:
reading out the biometric reference feature from a database by the electronic identification service (300) in order to obtain a read out biometric reference feature.

7. The method (100) according to one of the preceding claims as far as referred to claim 4, wherein the electronic identification service (300) further transmits, in response to an identification of the user via a communication network, a confirmation of the identification to the communication device (200) or to the electronic network service, or wherein the confirmation is displayed on a display device of the communication device (200).

8. A communication device (200) for identifying a user, wherein an identification document is assigned to the user, the communication device (200) comprising:
a communication interface (201) for receiving a request to transmit a biometric feature of the user to an electronic identification service (300); and
a detection device for detecting (101) a biometric feature of the user in response to the receipt of the request in order to obtain a detected biometric feature;
wherein the communication interface (201) is configured to transmit (103) the detected biometric feature to an electronic identification service via a communication network;
wherein the communication device comprises a further communication interface (205), wherein the further communication interface (205) is configured to read out the biometric reference feature from an electronic circuit of the identification document, and wherein the communication interface (201) is also configured to transmit the biometric reference feature to the electronic identification service (300) via a communication network,
wherein reading out the biometric reference feature from the electronic circuit of the identification document further comprises reading out personal data in order to obtain read out personal data, and wherein the transmission of the read out biometric reference feature via the communication network to the electronic identification service (300) further comprises transmitting the read out personal data to the electronic identification service (300), wherein the personal data indicates the identity of the user,
wherein the communication device (200) comprises an image camera for capturing data from a machine-readable zone of the identification document; and wherein the communication device (200) is configured to extract an identification identifier of the identification document from the captured data, wherein the communication device (200) is configured to check the validity of the identification document by means of the captured data, wherein a check of the certificate chain of an electronic signature associated with the identification document is carried out to check the validity of the identification document, wherein a reference certificate is pre-stored in a memory of the communication device for this purpose.

9. The communication device (200) according to claim 8, wherein the detection device (203) is a digital image camera for capturing a facial image or facial images of the user, wherein the facial image of the user is the captured biometric feature, or a digital video camera for capturing a facial video of the user, wherein the facial image of the user is the captured biometric feature, or a digital image camera for capturing an iris image of an eye of the user, wherein the iris image of the eye of the user is the captured biometric feature, or a fingerprint sensor for capturing a fingerprint of the user, wherein the fingerprint of the user is the captured biometric feature, or a microphone for capturing a voice pattern of the user, wherein the voice pattern of the user comprises the biometric feature.

10. A computer program with a program code for executing the method steps of the communication device (200) of the method (100) for identifying a user according to one of claims 1 to 7, when the program code is executed on the communication device (200) according to claim 8.

## Revendications

1. Procédé (100) d'identification d'un utilisateur par recours à un appareil de communication (200), un document d'identification étant associé à l'utilisateur, le procédé comprenant les étapes suivantes :
saisie (101) d'une caractéristique biométrique de l'utilisateur au moyen de l'appareil de communication (200) pour obtenir une caractéristique biométrique saisie,
transmission (103) de la caractéristique biométrique saisie à un service électronique d'identification par l'intermédiaire d'un réseau de communication par l'appareil de communication (200) et
comparaison (105) par le service électronique d'identification (300) de la caractéristique biométrique saisie avec une caractéristique biométrique de référence pour identifier l'utilisateur et
lecture de la caractéristique biométrique de référence dans un circuit électronique du document d'identification au moyen de l'appareil de communication (200) pour obtenir une caractéristique biométrique de référence lue et
transmission par l'appareil de communication (200) de la caractéristique biométrique de référence lue au service électronique d'identification (300) par l'intermédiaire du réseau de communication,
la lecture de la caractéristique biométrique de référence dans le circuit électronique du document d'identification au moyen de l'appareil de communication (200) comporte en outre une lecture d'une donnée personnelle pour obtenir une donnée personnelle lue, la transmission de la caractéristique biométrique de référence lue par l'appareil de communication (200) au service électronique d'identification (300) par l'intermédiaire du réseau de communication comportant en outre une transmission de la donnée personnelle lue au service électronique d'identification (300), la donnée personnelle indiquant l'identité de l'utilisateur,
le procédé comprenant en outre les étapes qui consistent à saisir des données dans une zone lisible par machine du document d'identification au moyen d'une caméra d'imagerie de l'appareil de communication et à extraire au moyen des données saisies une caractéristique d'identification du document d'identification, une vérification de la chaîne de certificat d'une signature électronique associée au document d'identification étant réalisée pour vérifier la validité du document d'identification, un certificat de référence étant dans ce but pré-conservé dans une mémoire de l'appareil de communication.

2. Procédé (100) selon la revendication 1, dans lequel la caractéristique biométrique saisie est l'image du visage de l'utilisateur, un spectre vocal de l'utilisateur, l'empreinte digitale d'un doigt de l'utilisateur ou l'image de l'iris d'un oeil de l'utilisateur.

3. Procédé (100) selon l'une des revendications précédentes, comprenant les étapes qui consistent à :
recevoir une invitation à faire transmettre la caractéristique biométrique saisie au service électronique d'identification (300) par l'appareil de communication (200) et
faire transmettre par l'appareil de communication (200) la caractéristique biométrique saisie au service électronique d'identification (300) en réponse à la réception de l'invitation, en particulier au moyen d'une liaison par vidéoconférence entre l'appareil de communication (200) et le service électronique d'identification (300) ou au moyen de la transmission d'une image fixe.

4. Procédé (100) selon l'une des revendications précédentes, dans lequel la donnée personnelle lue est transmise par l'intermédiaire d'un réseau de communication à un service de réseau électronique en réponse à l'identification de l'utilisateur par le service électronique d'identification (300).

5. Procédé (100) selon l'une des revendications précédentes, dans lequel la lecture de la caractéristique biométrique de référence dans le circuit électronique du document d'identification est réalisée en recourant à une communication de proximité ou à une identification par radiofréquence.

6. Procédé (100) selon l'une des revendications précédentes, qui comporte l'étape qui consiste à faire lire la caractéristique biométrique de référence dans une base de données par le service électronique d'identification (300) pour obtenir une caractéristique biométrique de référence lue.

7. Procédé (100) selon l'une des revendications précédentes dans la mesure où elles sont subordonnées à la revendication 4, dans lequel en réponse à l'identification de l'utilisateur, le service électronique d'identification (300) transmet en outre une confirmation de l'identification à l'appareil de communication (200) ou au service de réseau par l'intermédiaire du réseau de communication, ou dans lequel la confirmation est affichée sur un dispositif d'affichage de l'appareil de communication (200).

8. Appareil de communication (200) servant à identifier un utilisateur, un document d'identification étant associé à l'utilisateur, l'appareil comprenant :
une interface de communication (201) qui reçoit une invitation à transmettre une caractéristique biométrique de l'utilisateur à un service électronique d'identification (300) et
un dispositif de saisie (203) qui, en réponse à la réception de l'invitation, saisit une caractéristique biométrique de l'utilisateur pour obtenir une caractéristique biométrique saisie,
l'interface de communication (201) étant en outre configurée pour transmettre la caractéristique biométrique saisie au service électronique d'identification (300) par l'intermédiaire d'un réseau de communication,
l'appareil de communication comprenant une autre interface de communication (205), l'autre interface de communication (205) étant configurée pour lire la caractéristique biométrique de référence dans un circuit électronique du document d'identification, l'interface de communication (201) étant en outre configurée pour transmettre la caractéristique biométrique de référence au service électronique d'identification (300) par l'intermédiaire d'un réseau de communication,
la lecture de la caractéristique biométrique de référence dans le circuit électronique du document d'identification comprenant en outre la lecture d'une donnée personnelle pour obtenir une donnée personnelle lue, la transmission de la caractéristique biométrique de référence lue au service électronique d'identification (300) par l'intermédiaire du réseau de communication comprenant en outre la transmission de la donnée personnelle lue au service électronique d'identification (300), la donnée personnelle indiquant l'identité de l'utilisateur,
l'appareil de communication (200) comprenant une caméra d'imagerie qui saisit des données dans une zone lisible par machine du document d'identification, l'appareil de communication (200) étant configuré pour extraire une caractéristique d'identification du document d'identification dans les données saisies, l'appareil de communication (200) étant configuré pour vérifier la validité du document d'identification au moyen des données saisies, une vérification de la chaîne de certificat d'une signature électronique associée au document d'identification étant réalisée pour vérifier la validité du document d'identification, un certificat de référence étant dans ce but pré-conservé dans une mémoire de l'appareil de communication (200).

9. Appareil de communication (200) selon la revendication 8, dans lequel le dispositif de saisie (203) présente une caméra numérique d'imagerie qui saisit une image du visage ou des images du visage de l'utilisateur, l'image du visage de l'utilisateur étant la caractéristique biométrique saisie, une caméra vidéo numérique qui saisit une vidéo du visage de l'utilisateur, l'image du visage de l'utilisateur étant la caractéristique biométrique saisie, une caméra numérique qui saisit l'image de l'iris d'un oeil de l'utilisateur, l'image de l'iris de l'oeil de l'utilisateur étant la caractéristique biométrique saisie, un capteur d'empreinte digitale qui saisit l'empreinte digitale d'un doigt de l'utilisateur, l'empreinte digitale du doigt de l'utilisateur étant la caractéristique biométrique saisie, ou un microphone qui saisit un spectre vocal de l'utilisateur, le spectre vocal de l'utilisateur étant la caractéristique biométrique.

10. Programme informatique doté d'un code de programme permettant d'exécuter les étapes de traitement de l'appareil de communication (200) du procédé (100) d'identification d'un utilisateur selon l'une des revendications 1 à 7 lorsque le code de programme est exécuté sur l'appareil de communication (200) selon la revendication 8.
